# FASCICULE DE BREVET EUROPEEN

(11) **EP 1 591 218 B1**
(45) Date de publication et mention de la délivrance du brevet: **27.06.2007**
(21) Numéro de dépôt: 05103405.6
(22) Date de dépôt: 26.04.2005
(51) Int. Cl.: B29C 33/00, G03F 7/00

(54) **MOULE POUR LA NANO-IMPRESSION, PROCEDE DE FABRICATION D'UN TEL MOULE ET UTILISATION D'UN TEL MOULE**
Form für das Nanoimprintverfahren, sowie Anwendung und Verfahren zur Herstellung einer solchen Form
Mould for nanoimprinting, method of manufacture of such a mould and use of such a mold

(30) Priorité: 28.04.2004 FR 0450809
(43) Date de publication de la demande: 02.11.2005
(73) Titulaire: COMMISSARIAT A L'ENERGIE ATOMIQUE, 75015 Paris (FR); CENTRE NATIONAL DE LA RECHERCHE SCIENTIFIQUE (CNRS), 75016 Paris (FR)
(72) Inventeur: LANDIS, Stéfan, 38500 Voiron (FR); MOLLARD, Laurent, 38000, GRENOBLE (FR); GOURGON, Cécile, 38110, CESSIEU (FR); TORTAI, Jean-Hervé, 38000, GRENOBLE (FR)
(74) Mandataire: Poulin, Gérard

(56) Documents cités:
- FR-A- 2 849 221
- LIN S C ET AL: "Simultaneous immobilization of protein microarrays by a micro stamper with back-filling reservoir" SENSORS AND ACTUATORS B, ELSEVIER SEQUOIA S.A., LAUSANNE, CH, vol. 99, no. 1, 15 avril 2004 (2004-04-15), pages 174-185, XP004505759 ISSN: 0925-4005
- HEYDERMAN L J ET AL: "Flow behaviour of thin polymer films used for hot embossing lithography" MICROELECTRONIC ENGINEERING, ELSEVIER PUBLISHERS BV., AMSTERDAM, NL, vol. 54, no. 3-4, décembre 2000 (2000-12), pages 229-245, XP004225814 ISSN: 0167-9317

## Description

### DOMAINE TECHNIQUE

L'essor technologique dans les domaines de la micro-électronique, des micro-systèmes optiques, magnétiques ou mécaniques et plus généralement de l'industrie de la miniaturisation va impliquer un changement progressif des techniques de fabrication de micro- et nano-objets. Dans cette course à la miniaturisation, la lithographie joue un rôle extrêmement important puisque c'est cette étape qui va définir les limites de résolution d'un procédé industriel.

A ce jour la lithographie optique dans l'ultraviolet profond (connu sous la dénomination anglo-saxonne de Deep UV) de longueur d'onde environ de 248 nanomètres est la technique de lithographie utilisée en production industrielle. Cette technique concilie à la fois une résolution suffisamment élevée (de l'ordre de 130 nm) pour les dispositifs actuels et un rendement en accord avec les exigences économiques. Malgré tout, certains outils de lithographie permettent actuellement de réaliser des motifs dont la résolution peut aller jusqu'à quelques dizaines de nanomètres. De telles résolutions peuvent être atteintes grâce notamment à la lithographie par faisceau d'électrons, mais l'inconvénient majeur est le temps d'écriture trop long pour une application dans le domaine industriel.

La nano-impression ou impression directe de structures à l'échelle nanométrique, est une méthode originale de duplication de motifs, qui permet d'atteindre des résolutions comparables à celles de la lithographie par faisceau d'électrons, mais en des temps de procédé beaucoup plus courts.

### ÉTAT DE LA TECHNIQUE ANTÉRIEURE

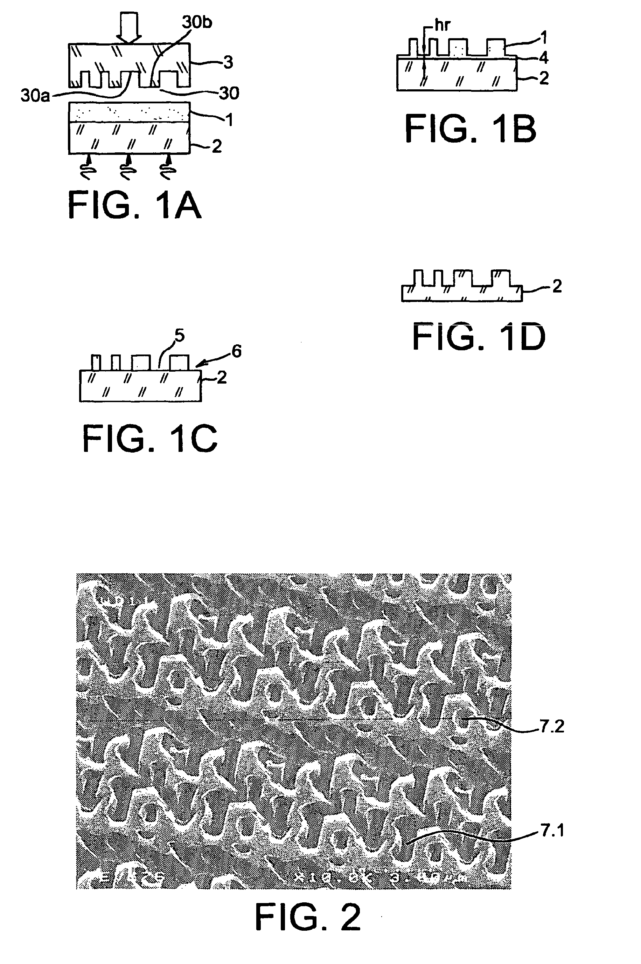

Le principe de la nano-impression, tel que décrit par exemple dans le brevet US-A- 5 772 905 et illustré sur les figures 1A à 1D, consiste à déformer physiquement une couche de matière à mouler 1, généralement un polymère et/ou de la résine, placée sur un substrat 2, par un moule 3 portant des motifs 30 avec un ou plusieurs creux 30a et une ou plusieurs saillies 30b. Le moule 3 est appliqué et pressé, avec une pression P à l'aide d'une presse (non représentée), sur la couche de matière à mouler 1 (figure 1A). La couche de matière à mouler 1 est portée à une température supérieure à sa température de transition vitreuse. Le moule 3 est réalisé par l'une des techniques de lithographie conventionnelles telles que la lithographie par UV profond ou la lithographie par faisceau d'électrons.

Les motifs du moule 3 se retrouvent alors imprimés en négatif dans la couche de matière à mouler 1 après retrait du moule 3 (figure 1B). On obtient donc des motifs avec une ou plusieurs saillies et un ou plusieurs creux. En d'autres termes l'empreinte du moule se retrouve dans la matière à mouler 1. Cette empreinte contribue à former un masque dont les motifs pourront ensuite être transférés par gravure dans le substrat 2. Les motifs du moule 3 en creux et en saillie ont généralement tous sensiblement la même profondeur puisqu'on veut réaliser un masque. On fait en sorte que de la matière à mouler résiduelle 4 subsiste entre le substrat 2 et le moule 3, en fin de pressage, de manière à ce que le moule 3 ne vienne pas en contact le substrat 2. Il risquerait alors de s'endommager.

La matière à mouler résiduelle 4 est ensuite éliminée par gravure de type plasma d'oxygène pour mettre à nu le substrat 2 (figure 1C). La couche de matière à mouler 1 ainsi délimitée forme le masque 6 avec une ou plusieurs ouvertures traversantes 5.

Une étape de gravure plasma permet d'attaquer le substrat 2 au niveau des ouvertures traversantes 5 de manière à transférer les motifs du masque 6 dans le substrat 2 (figure 1D).

La résolution de la technique de nano-impression est celle du moule. Elle dépend donc principalement de la technique de lithographie utilisée pour fabriquer le moule. L'avantage de la nano-impression, comparée à des techniques tout aussi résolvantes que la lithographie par faisceau d'électrons, est la relative rapidité de reproduction des motifs. A titre de comparaison, l'impression de plots de 200 nanomètres de diamètre espacés de 200 nanomètres, sur une surface de 1 cm² nécessite 3 heures en lithographie par faisceau d'électrons et seulement quelques minutes en nano-impression.

La technique de nano-impression est surtout prometteuse pour des applications dans le domaine des nano-technologies. Elle doit en particulier permettre d'obtenir de très petites dimensions sur des surfaces importantes par exemple sur des substrats de diamètre de plusieurs centaines de millimètres.

Toutefois cette technique de nano-impression pose au moins deux types de problèmes.

Le premier concerne un risque de confinement de fluide entre la matière à mouler et le fond du moule.

Lors d'un pressage à pression atmosphérique, de l'air peut être confiné au fond du moule et il se produit un phénomène de digitation qui a comme conséquence d'imprimer des passages 7 d'écoulement dans la matière à mouler en plus des motifs souhaités. Il est alors impossible de reproduire fidèlement dans la matière à mouler le négatif des motifs du moule. Ces passages 7.1, ou doigts de Saffman-Taylor, sont présentés sur la figure 2. Les motifs qui sont le négatif de ceux du moule portent la référence 7.2.

Ce phénomène a été découvert lors de l'extraction du pétrole qui imbibe généralement des roches poreuses. On cherchait à chasser le pétrole de ces roches en le poussant avec de l'eau (ou un gaz). Lors d'un tel processus, des pétroliers ont remarqué la formation de "doigts" d'eau dans le pétrole limitant ainsi la vitesse de récupération de celui-ci.

Saffman et Taylor observèrent que lorsqu'un fluide moins visqueux pousse un fluide plus visqueux dans un canal linéaire et mince, l'interface entre les deux fluides se déstabilise et il y a formation d'un motif qu'on appelle aujourd'hui doigt de Saffman-Taylor ou instabilité de Saffman-Taylor.

Ces instabilités posent de réels problèmes puisqu'elles détruisent les structures pressées localement, voire sur des surfaces importantes.

Une solution peut être de travailler sous vide, mais les équipements actuels de nano-impression ne permettent pas toujours de travailler sous vide ou de pomper suffisamment l'air présent entre le moule et la matière à mouler.

Les inventeurs se sont aperçus également que ce problème d'instabilité de Saffman-Taylor n'est pas uniquement lié à la présence d'air, mais qu'il pouvait être dû aussi à des produits de dégazage de la matière à mouler apparaissant lors de la montée en température.

Un autre problème gênant est que, lors de l'impression de l'empreinte du moule 3 dans la couche de matière à mouler 1, il se produit des inhomogénéités de l'épaisseur hr de matière à mouler résiduelle 4 en fonction de l'emplacement des parties en saillie 30b du moule 3 par rapport au substrat 2 et/ou de leur densité.

On cherche à ce que l'épaisseur hr de matière à mouler résiduelle 4, nécessaire pour éviter tout contact entre le moule 3 et le substrat 2 soit la plus homogène possible sur toute la surface du substrat 2. On peut se référer à la figure 1B.

On notera que l'épaisseur initiale de la couche matière à mouler 1 peut être comprise entre quelques nanomètres et quelques centaines de microns et que l'épaisseur hr de la matière à mouler résiduelle 4 peut être comprise entre quelques nanomètres et la valeur de l'épaisseur initiale de la couche de matière à mouler.

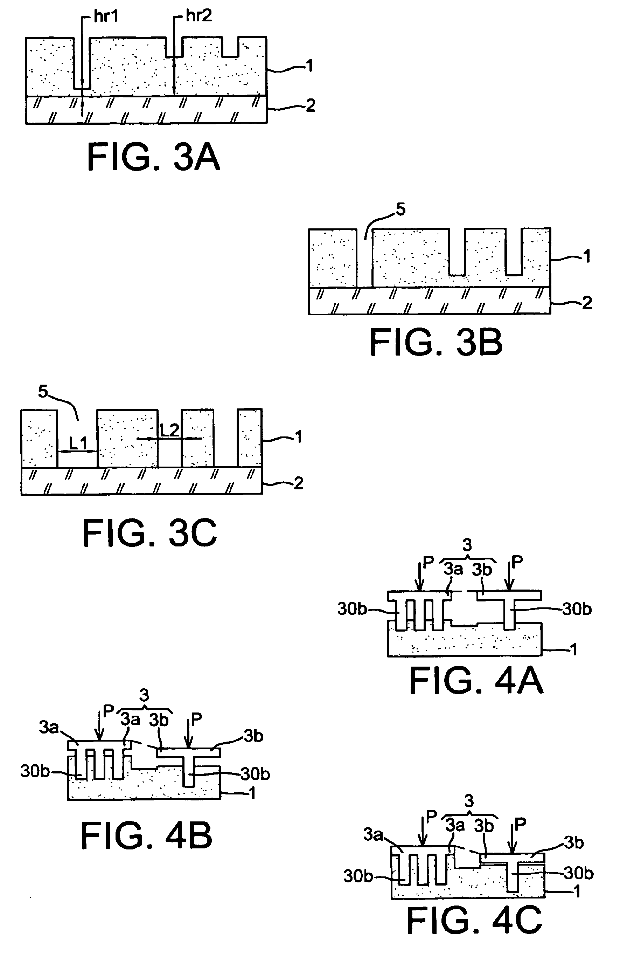

En effet une inhomogénéité de l'épaisseur hr de la matière à mouler résiduelle 4 aura plusieurs conséquences qui vont être expliquées en liaison avec les figures 3A à 3C. La figure 3A illustre l'empreinte du moule réalisée dans la couche de matière à mouler initiale. L'épaisseur hr1 obtenue pour le creux de gauche est plus petite que celles hr2 obtenue pour les creux de droite. Lors de l'étape de gravure visant à réaliser les ouvertures traversantes 5 du masque 6, décrite à la figure figure 1B, et donc à mettre à nu le substrat 2 au niveau des creux de l'empreinte du moule 3 dans la couche de matière à mouler 1, le substrat 2 est atteint plus vite là où l'épaisseur est la plus petite (hr1), comme montré au niveau du creux de gauche de la figure 3B. La gravure va néanmoins être poursuivie jusqu'à ce que le substrat 2 soit atteint pour tous les autres creux (figure 3C). Pendant ce temps supplémentaire de gravure, l'ouverture traversante 5 de gauche, obtenue en premier, va s'élargir du fait d'une gravure latérale inhérente aux procédés de gravure plasma. Sa largeur L1 devient bien plus grande que celles L2 des autres ouvertures traversantes 5 obtenues ultérieurement.

Une inhomogénéité d'épaisseur résiduelle entraîne donc une perte du contrôle dimensionnel des motifs du masque 6, après gravure plasma par rapport aux motifs 30 du moule 3. Cette perte du contrôle dimensionnel se manifestera dans le substrat 2 lors de sa gravure.

Ceci n'est pas envisageable pour la réalisation de nanostructures qui nécessitent un contrôle dimensionnel le plus parfait possible.

Cette inhomogénéité d'épaisseur résiduelle apparaissant lors du pressage peut avoir différentes origines. Tout d'abord, elle peut être issue d'une mauvaise répartition de la force exercée par le piston de la presse. Le parallélisme entre le moule 3 et substrat 2 n'est pas forcément bien maîtrisé et peut influencer localement l'épaisseur de matière à mouler résiduelle 4. Lors du pressage, le moule 3 peut également subir des déformations locales qui entraînent cette variation d'épaisseur de matière à mouler résiduelle 4.

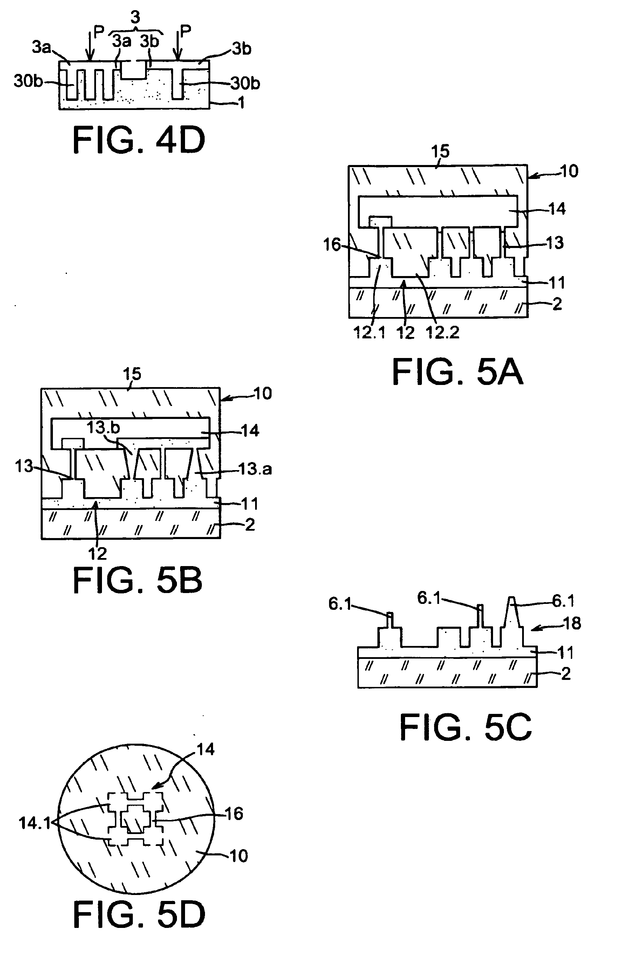

Sur les figures 4A à 4D, on peut comparer l'avancement de deux parties distantes 3a, 3b d'un moule 3 dans une couche de matière à mouler 1. Ces deux parties sont soumises chacune à une force P de même intensité. La partie 3a est dotée de motifs dont la densité est beaucoup plus importante que celle des motifs de la partie 3b. En effet, dans cet exemple la partie 3a comporte trois saillies alors que la partie 3b n'en a qu'une à superficie égale. Lors du passage de la figure 4A à 4C, on s'aperçoit que la partie 3a est davantage freinée par l'évacuation de la matière à mouler 1 que la partie 3b, ses motifs sont plus denses. Cela entraîne une déformation du moule 3 qui se traduit par une différence de niveaux des deux parties 3a, 3b du moule 3. Ce freinage lors du pressage va ainsi entraîner une variation de l'épaisseur de matière à mouler résiduelle lors de l'application d'une même force P de pressage. Pour obtenir en final une même épaisseur de matière à mouler résiduelle, il faut appliquer une force plus longtemps sur le moule 3a, comme l'illustre la figure 4D.

De la même manière, l'épaisseur de la matière à mouler résiduelle varie pour des motifs de taille différente, du fait de la différence de quantité de matière à mouler à déplacer autour des saillies 30b du moule.

Si dans un même moule les motifs comportent des zones de densités différentes ou bien des saillies et/ou des creux de sections différentes, on comprend bien, grâce aux explications précédentes, qu'on n'obtiendra pas une épaisseur de matière à mouler résiduelle homogène au-dessous de l'empreinte du moule à l'issu du pressage.

L'article de Lin et al.: "Simultaneous immobilization of protein microarrays by a microstamper with back-filling reservoir", SENSORS AND ACTUATORS B, ELSEVIER, vol. 99, n° 1, 15 avril 2004, pages 174-185, montre une micro matrice avec un réservoir, des motifs de type creux et saillie et un ou plusieurs canaux agencés comme dans le préambule de la revendication 1.

### EXPOSÉ DE L'INVENTION

La présente invention a justement comme but de proposer un moule pour la nano-impression qui ne soit pas à l'origine des problèmes évoqués plus haut lors de son utilisation.

Un but est en particulier de proposer un moule pour la nano-impression qui permette d'éviter les problèmes de confinement de fluide. Un autre but est de proposer un moule pour la nano-impression qui permette d'obtenir à l'issu du pressage une épaisseur de matière à mouler résiduelle sensiblement constante quels que soient le type de motifs du moule et la densité de ces derniers.

Pour y parvenir, la présente invention propose de prévoir au moins un canal permettant un échappement du fluide engendrant l'instabilité de Saffmann-Taylor et d'une partie de la matière à mouler. Ainsi l'échappement du fluide permet que les motifs obtenus par moulage soient exempts de doigts de Saffmann-Taylor. L'échappement d'une partie de la matière à mouler permet une pénétration sensiblement homogène du moule dans la matière à mouler quels que soient les motifs du moule et donc l'obtention d'une épaisseur de matière à mouler résiduelle aussi constante que possible.

Pour atteindre ces buts, l'invention concerne plus précisément un moule pour la nano-impression tel que défini dans la revendication 1. Il est doté de motifs en creux et saillie et d'un ou plusieurs canaux, chacun d'entre eux faisant communiquer un motif du moule avec un réservoir.

De préférence, un canal débouche au niveau d'un creux.

La zone réservoir peut comporter un réservoir unique ou une pluralité de réservoirs.

Lorsqu'il y a plusieurs réservoirs, les réservoirs peuvent être indépendants ou communiquer entre eux.

Un canal peut avoir une section transversale sensiblement constante ou au contraire avoir une section transversale variable.

Un canal peut être sensiblement tronconique ce qui permet de prédéterminer la localisation de la zone de rupture de la matière à mouler lors du démoulage.

La zone réservoir peut communiquer avec l'extérieur du moule pour faciliter la vidange de la zone réservoir après utilisation du moule.

La- communication peut se faire à l'aide d'un conduit qui débouche à la périphérie du moule.

La présente invention concerne également un procédé de réalisation d'un moule pour la nano-impression ayant des motifs en creux et en saillie tel que défini dans la revendication 12. Il comporte plusieurs étapes utilisant des techniques de lithographie, ces étapes incluant une étape de réalisation de motifs du moule, une étape de réalisation d'une zone réservoir, une étape de réalisation d'au moins un canal qui fait communiquer la zone réservoir avec un motif du moule, ces trois étapes utilisant des noyaux.

L'étape de réalisation de la zone réservoir peut se faire :
- en réalisant, par lithographie, un premier noyau correspondant à l'intérieur de la zone réservoir ;
- en encapsulant le premier noyau dans un matériau qui est celui du moule ;
- en planarisant le matériau du moule avec arrêt sur le premier noyau de manière à obtenir une première surface;
- en éliminant le premier noyau pour libérer l'intérieur de la zone réservoir.

L'étape de réalisation d'au moins un canal peut se faire :
- en réalisant, par lithographie, un second noyau correspondant à l'intérieur du canal ;
- en encapsulant le second noyau dans un matériau qui est celui du moule ;
- en planarisant le matériau du moule avec arrêt sur le second noyau de manière à obtenir une seconde surface;
- en éliminant le second noyau pour libérer l'intérieur du canal.

L'étape de réalisation des motifs peut se faire :
- en réalisant, par lithographie au moins un troisième noyau correspondant à un creux des motifs ;
- en encapsulant le troisième noyau dans un matériau qui est celui du moule ;
- en planarisant le matériau du moule avec arrêt sur le troisième noyau de manière à obtenir une troisième surface;
- en éliminant le troisième noyau pour libérer le creux.

Le premier noyau peut être réalisé sur un substrat servant de fond au moule.

Le second noyau peut être réalisé sur la première surface.

Le troisième noyau peut être réalisé sur la seconde surface.

L'étape d'élimination peut être commune pour le premier, le second et le troisième noyau.

Dans une variante, le troisième noyau peut être est réalisé sur un second substrat.

Le second substrat peut être bicouche.

On peut ainsi réaliser le second noyau sur la troisième surface.

L'étape d'élimination est alors commune pour le second et le troisième noyau.

On peut assembler la seconde surface à la première surface après l'étape d'élimination.

Le second substrat peut être ôté après l'assemblage.

Le premier noyau, le second noyau, le troisième noyau peuvent être réalisés par un matériau qui a été gravé à travers un masque obtenu par lithographie.

En variante, les noyaux peuvent être réalisés à base d'un matériau sensible exposé et développé.

Le procédé peut comporter une étape de recuit sévère entre le développement et l'encapsulation, visant à transformer le matériau sensible.

Le matériau sensible peut être une résine photosensible ou sensible aux électrons.

Le matériau sensible peut être un matériau de la famille des hydrogensilses quioaxanes.

En variante, le matériau sensible peut être une résine minérale telle que le fluorure d'aluminium.

La présente invention concerne également l'utilisation d'un tel moule pour le moulage d'un matériau déformable.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A à 1D montrent un enchaînement d'étapes d'un procédé conventionnel de la nano-impression ;
la figure 2 montrent des défauts dans un moulage obtenus avec un moule de l'art antérieur ;
les figures 3A à 3C montrent d'autres défauts du moulage obtenu avec un moule de l'art antérieur ;
les figures 4A à 4D mettent en évidence les problèmes rencontrés lors de l'utilisation d'un moule de l'art antérieur à motifs denses ;
les figures 5A à 5D montrent diverses vues d'un moule conforme à l'invention ;
les figures 6A, 6B montrent plusieurs vues d'un moule selon l'invention dont la zone réservoir comporte plusieurs réservoirs ;
les figures 7A à 70 illustrent des étapes d'un premier mode de réalisation d'un moule selon l'invention ;
les figures 8A à 8D illustrent de manière partielle une première variante au procédé illustré aux figures 7 ;
la figure 9 montre une vue en coupe d'un canal d'un moule selon l'invention obtenu avec le procédé des figures 8 ;
les figures 10A à 10E illustrent de manière partielle une autre variante du procédé illustré aux figures 7 ;
les figures 11A à 11G illustrent un autre mode de réalisation de la zone réservoir d'un moule selon l'invention ;
les figures 12A à 12K illustrent un autre mode de réalisation d'un ou plusieurs canaux et des motifs d'un moule selon l'invention ;
les figures 13A, 13B illustrent l'assemblage de la structure de la figure 11G à la structure de la figure 12K conduisant à l'obtention d'un moule selon l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On se réfère maintenant à la figure 5A qui montre un moule 10 selon l'invention lors d'une opération de pressage d'une matière à mouler 11. Cette matière 11 peut être tout matériau présentant une phase solide et visqueuse ou liquide dans la gamme de température utilisée (température ambiante à quelques centaines de degrés centigrades). Par exemple on pourra utiliser soit des polymères présentant des températures de transition vitreuse et donc une phase solide et viscoélastique, soit des métaux avec des faibles températures de fusion comme l'étain (Sn) ou l'indium (In). Cette matière a été déposée sur un substrat 2 à la tournette par exemple.

Le moule 10 comporte classiquement des motifs 12 en creux 12.1 et en saillie 12.2 et un fond 15. Au moins un canal 13 fait communiquer un motif 12 du moule 11 avec une zone réservoir 14 pour la matière à mouler 11. Dans l'exemple la zone réservoir comporte un réservoir unique 14 entièrement couvert mais ce n'est pas une obligation. Au lieu que les motifs 12 soient au niveau du fond du moule comme conventionnellement, maintenant la zone réservoir 14 est insérée entre les motifs 12 et le fond 15 du moule 10. Ce dernier couvre la zone réservoir 14. On peut parler de double-fond.

Dans l'exemple représenté, il y a un canal 13 qui débouche au niveau de chaque creux 12.1. Le nombre de canaux n'est pas forcément égal au nombre de creux. On peut envisager qu'il y ait moins ou plus de canaux que de creux. De la même manière au moins un canal pourrait déboucher au niveau d'une saillie ou encore sur un flanc d'une zone en creux.

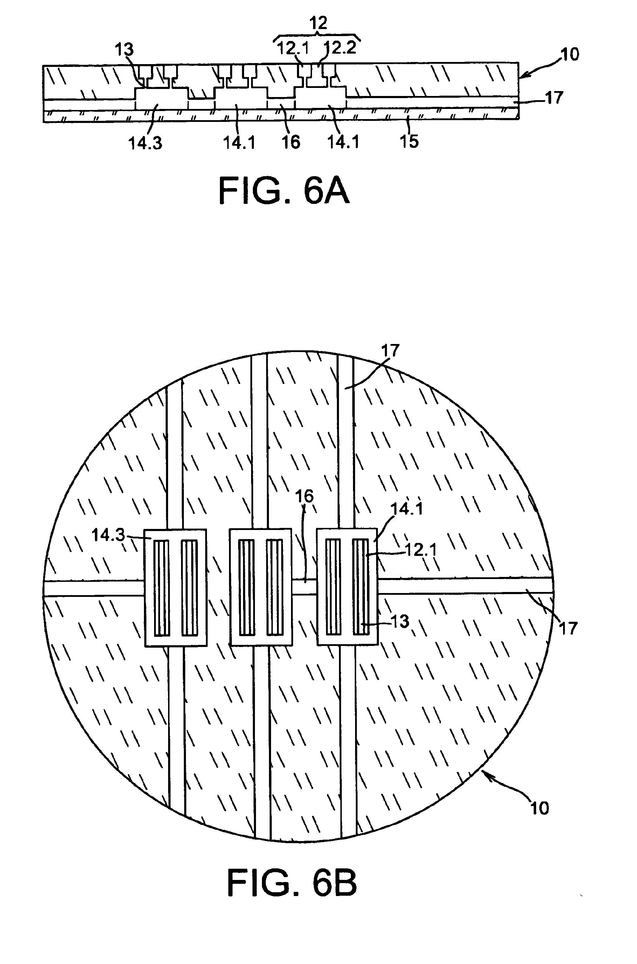

Dans l'exemple représenté, plusieurs canaux 13 débouchent dans le réservoir 14 unique. On pourrait envisager que la zone réservoir 14 comporte plusieurs réservoirs distincts comme sur la figure 6B, que ces réservoirs soient indépendants les uns des autres ou qu'ils communiquent entre eux.

L'utilisation d'au moins un canal 13 et de la zone réservoir 14 permet de compenser les problèmes de confinement d'air (ou de produit de dégazage) existants précédemment entre la matière à mouler et les motifs. Cet air s'évacue par les canaux vers la zone réservoir.

Les problèmes d'inhomogénéité d'épaisseur de matière à mouler résiduelle sont également résolus car de la matière à mouler 11 en excès qui auparavant aurait formé une surépaisseur s'évacue par un canal 13 et s'accumule dans la zone réservoir 14.

On peut remarquer que sur la figure 5A, la densité de motifs 12 est faible sur la partie gauche du moule 10, il y a un creux 12.1 isolé, sur la partie droite la densité de motifs est plus importante, il y a un groupement de trois creux 12.1. Des canaux 13 débouchent au niveau de chacun de ces creux 12.1.

Les canaux 13 sont de taille nanométrique. On pourra leur donner une forme simple, par exemple ils peuvent avoir une section transversale circulaire ou rectangulaire ou carrée sensiblement constante. Cette section sera inférieure à la superficie du motif au niveau duquel ils débouchent.

Ces canaux 13 délimitent une zone d'étranglement 16 entre un motif 12 et la zone réservoir 14. Les canaux 13 forment donc pour la matière à mouler 11 une zone de fragilité mécanique, ce qui induit que, lors du démoulage, la matière à mouler 11 va se rompre au niveau d'un canal 13. Le point de rupture dépendra de la forme du canal.

Avec un canal 13 de section sensiblement constante, le point de rupture se trouvera au sein du canal.

Des formes de canaux plus compliquées peuvent toutefois être utilisées comme représenté sur la figure 5B. Deux des canaux 13.a, 13.b ont une forme sensiblement tronconique. Les autres ont une section sensiblement constante. La section la plus petite du canal se trouve soit au niveau du motif, soit au niveau de la zone réservoir 14. Les deux variantes sont représentées sur la figure 5B. Le canal évasé depuis le motif vers la zone réservoir porte la référence 13.a, le canal évasé depuis la zone réservoir vers le motif porte la référence 13.b. Dans ce cas, la zone de rupture de la matière à mouler se situe au niveau de la section la plus petite du canal. Les zones de rupture préférentielle sont repérées par des pointes de flèches.

La figure 5C illustre l'empreinte 18 du moule 10 obtenue dans la matière à mouler 11 après démoulage du moule représenté à la figure 5B. Trois des canaux contribuent à la formation de motifs dans la matière à mouler 11. Ces motifs sont des colonnettes référencées 6.1.

Les contraintes qui apparaissent lors de la réalisation d'un tel moule 10 sont de réaliser d'une part la partie réservoir 14 et d'autre part un ou plusieurs canaux, chacun d'entre eux ayant une section transversale inférieure à celle du motif dans lequel il débouche.

Si l'on veut utiliser ce moule pour imprimer un masque dans l'optique de réaliser une grille dont la largeur est d'environ 50 nanomètres, un canal pourra avoir une largeur d'environ 10 nanomètres.

La contenance de la zone réservoir 14 sera ajustée en fonction du volume des motifs 12 du moule ainsi que de la densité de la matière à mouler 11. On s'arrange pour que cette contenance soit supérieure à la quantité de la matière à mouler 11 déplacée pendant le pressage. Lorsque la zone réservoir 14 est alimentée par plusieurs canaux comme sur la figure 5C, sa largeur pourra atteindre plusieurs micromètres, voire plusieurs dizaines de micromètres. Sa hauteur pourra être comprise entre quelques nanomètres et quelques centaines de nanomètres par exemple.

Pour conserver une bonne rigidité mécanique du moule 10 lors du pressage, au lieu de disposer d'un grand réservoir unique, il est possible que la zone réservoir comporte une pluralité de réservoirs. Ces réservoirs peuvent être indépendants, mais il est préférable qu'ils soient connectés entre eux pour augmenter le volume total disponible pour la matière à évacuer (matière à mouler ou gaz). Sur les figures 6A, 6B, le réservoir de gauche référencé 14.3 est indépendant, les réservoirs de droite référencés 14.1 communiquent entre eux par un conduit 16.

La figure 5D montre en vue de dessus une zone réservoir 14 comportant plusieurs petits réservoirs 14.1 ainsi qu'au moins un conduit 16 de connexion des réservoir 14.1 entre eux.

On aura intérêt à disposer les réservoirs 14.1, 14.3 à l'aplomb de zones où les motifs 12 du moule 10 sont les plus denses, car c'est dans ces zones, que la pénétration du moule 10 dans la matière à mouler 11 est la plus difficile. Le nombre de réservoirs 14.1 et leur localisation dépendent donc de la géométrie des motifs 12 du moule 10.

On se réfère aux figures 6A, 6B. Ces figures montrent une coupe transversale d'un moule 10 selon l'invention ainsi qu'une vue de dessus du moule 10 alors que son fond 15 a été ôté.

Il est également possible de doter la zone réservoir 14, lorsqu'elle prend la forme d'une cavité fermée, qu'elle comporte un réservoir unique ou plusieurs réservoirs, d'au moins une ouverture 17 vers l'extérieur, en plus du canal qui débouche au niveau des motifs. Cette ouverture 17 sert d'évent lors du moulage, elle sert également à l'évacuation et à la dissolution de la matière à mouler 11 qui a été recueillie dans la zone réservoir 14 à l'issu du démoulage. Cette ouverture 17 sert en outre, lors de la fabrication du moule 10, à faciliter l'évacuation du matériau qui a servi à modeler l'intérieur de la zone réservoir 14 comme on le verra ultérieurement. Cette ouverture peut prendre la forme d'un conduit 17. Il peut s'étendre dans un plan sensiblement perpendiculaire à la direction des canaux 13. Ce conduit 17 débouche à la périphérie du moule 10.

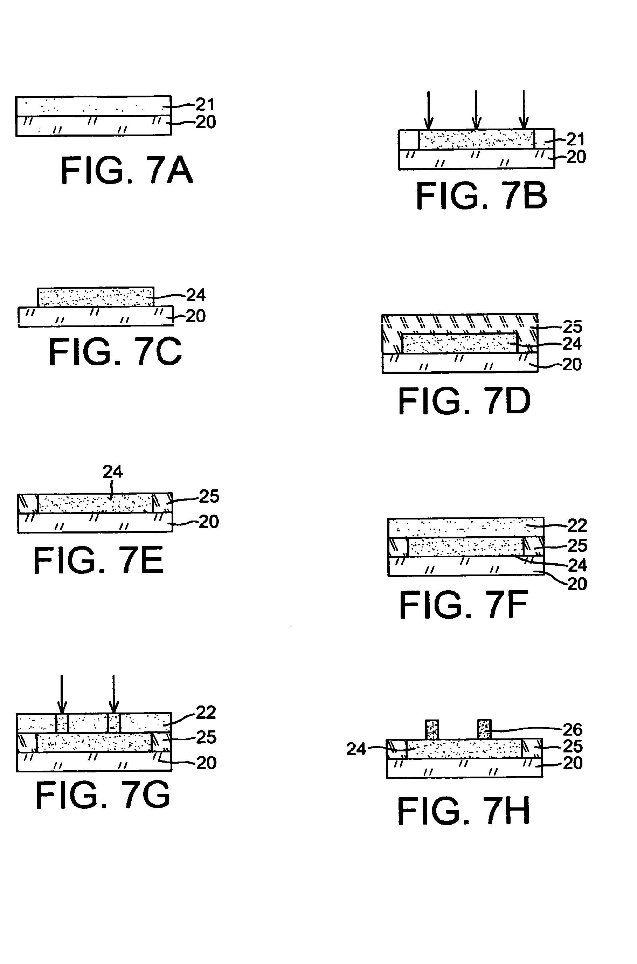

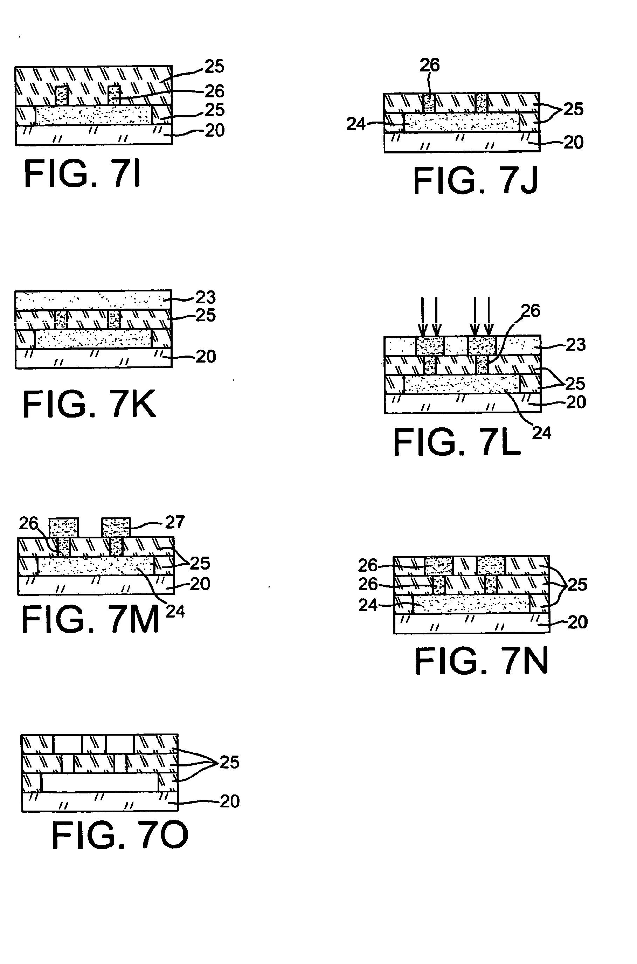

On va voir maintenant en se référant aux figures 7A à 70 un premier exemple de procédé de réalisation d'un moule selon l'invention. Ce procédé emploie des techniques de lithographie classiques.

On commence par réaliser la zone réservoir du moule : il s'agit du réservoir unique ou des réservoirs élémentaires, et d'éventuels conduits de communication entre réservoirs élémentaires et d'accès vers l'extérieur.

On dépose sur un substrat 20 une première couche d'un matériau sensible 21 (figure 7A). Le dépôt peut se faire par une technique classique en lithographie par exemple à la tournette. Le substrat 20 va servir de couvercle à la zone réservoir et donc de fond au moule. En exposant le matériau sensible 21 à des moyens d'impression appropriés, on va pouvoir l'impressionner selon un motif qui correspond au contour de l'intérieur de la zone réservoir. Les moyens d'impression peuvent être un faisceau photonique (par exemple dans l'ultraviolet) et/ou un faisceau particulaire électronique ou atomique (figure 7B). Si il y a plusieurs réservoirs élémentaires et/ou un ou plusieurs conduits de connexion entre eux et/ou un ou plusieurs conduits vers l'extérieur on prend en compte le contour de l'intérieur de ceux-ci.

Le matériau sensible 21 est ensuite développé de manière à former un premier noyau 24 à la forme de l'intérieur de la zone réservoir (figure 7C). Le développement se fait à l'aide d'un révélateur approprié qui dépend de la nature du matériau sensible.

L'étape suivante est d'encapsuler le premier noyau 24 avec un second matériau 25 qui est le matériau du moule (figure 7D). Suit une étape de planarisation avec arrêt sur le premier noyau 24 de manière à obtenir une première surface (figure 7E).

On dépose, à la figure 7F, sur la première surface, une seconde couche 22 d'un matériau sensible, le même que précédemment ou un autre, pour réaliser un ou plusieurs canaux devant relier la zone réservoir aux motifs du moule (réalisés ultérieurement). On l'expose selon un motif correspondant au contour de l'intérieur des canaux (figure 7G). On développe le matériau sensible 22 pour obtenir un ou plusieurs seconds noyaux 26, chacun à la forme de l'intérieur d'un canal (figure 7H). On encapsule les seconds noyaux 26 ainsi obtenus avec le matériau 25 du moule (figure 7I). Suit une étape de planarisation du matériau du moule 25 avec arrêt sur les seconds noyaux 26 de manière à obtenir une seconde surface (figure 7J).

On dépose sur la seconde surface une troisième couche 23 d'un matériau sensible (figure 7K) pour réaliser les motifs du moule. On expose cette troisième couche 23 selon un motif correspondant au contour des motifs du moule (figure 7L). On développe le matériau sensible 23 de manière à obtenir un ou plusieurs troisièmes noyaux 27 à la forme des creux des motifs du moule (figure 7M). On encapsule les troisièmes noyaux 27 ainsi obtenus, avec le matériau du moule que l'on planarise avec arrêt sur les troisième noyaux 27, de manière à obtenir une troisième surface (figure 7N). On n'a plus qu'à éliminer le matériau sensible des noyaux 24, 26, 27 pour libérer la zone réservoir, les canaux et les creux des motifs.

L'encapsulation peut se faire par des techniques standard de dépôt physique en phase vapeur PVD (pulvérisation, évaporation......) ou de dépôt chimique en phase vapeur CVD.

La planarisation s'effectue par des moyens standards de microélectronique comme par exemple un polissage mécanique et/ou chimique.

L'élimination du matériau sensible se fait par dissolution une solution liquide ou gazeuse appropriée (par exemple solvant ou acide) ou par un traitement plasma.

Le matériau sensible doit présenter une sélectivité suffisante vis-à-vis du matériau du moule afin de pouvoir être éliminé sans toucher à l'intégrité du moule.

Le substrat 20 pourra être avantageusement un matériau semi-conducteur, par exemple à base de silicium, de germanium, d'arséniure de gallium ou un métal par exemple à base de tungstène, de chrome.

Le matériau sensible doit avoir un pouvoir de résolution suffisant pour que des dimensions nanométriques puissent être obtenues lors de l'exposition.

Enfin le matériau sensible doit être technologiquement compatible avec le matériau du moule qui va l'encapsuler. Le matériau du moule lui doit avoir les propriétés requises pour la nano-impression comme la tenue mécanique.

D'autres matériaux pourraient être utilisés comme par exemple le PMMA (polyméthacrylate de méthyle), le calixarène, en modifiant de façon connue de l'homme du métier le procédé de réalisation du moule pour le rendre compatible avec ces résines.

Un autre matériau sensible qui convient bien, est un matériau de la famille des hydrogensilses quioaxanes (HSQ) qui sont des polymères à base de siloxane dans lesquels les atomes de silicium sont directement attachés aux atomes d'oxygène et d'hydrogène.

Le matériau du moule 25 pourra être un semi-conducteur tel que le polysilicium ou le germanium par exemple ou un métal tel que du tungstène, du chrome, du nickel par exemple. Le matériau du substrat 20 et le matériau du moule 25 sont de préférence les mêmes. Ce n'est pas bien sur une obligation, le substrat ne servant que de fond au moule et de couverture à la zone réservoir.

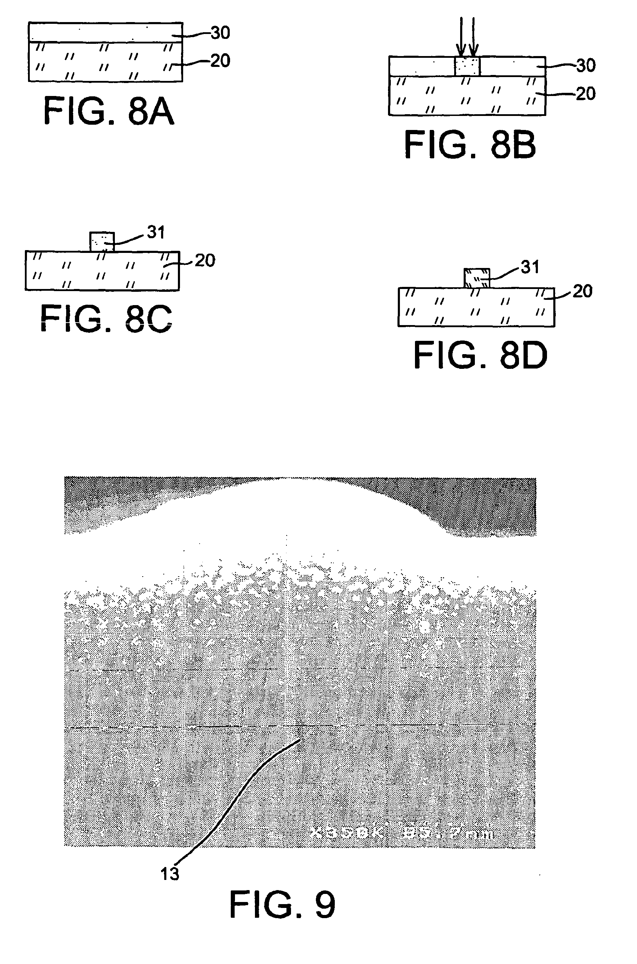

On va maintenant décrire aux figures 8A à 8D une variante du procédé décrit précédemment, cette variante est propre à l'emploi du HSQ comme matériau sensible. L'enchaînement des étapes que l'on va décrire 8A à 8D remplace, dans l'exemple précédent, la séquence des figures 7A à 7C. On procéderait de manière similaire pour les séquences des figures 7F à 7H et 7K à 7M.

On recouvre le substrat 20 d'une couche 30 de HSQ (figure 8A). Ce dépôt se fait classiquement par exemple à la tournette. L'étape suivante (figure 8B) est l'exposition de la couche d'HSQ en suivant le contour de l'intérieur de la zone réservoir, de l'intérieur d'un ou plusieurs canaux ou des motifs du moule. Cette exposition se fait à l'aide d'un faisceau d'électrons. L'étape suivante (figure 8C) est une étape de développement du HSQ, ce qui permet d'obtenir au moins un noyau 31, à la forme de l'intérieur de la zone réservoir, à la forme de l'intérieur d'un canal ou à la forme de l'intérieur d'un creux du moule. Le développement peut se faire dans une solution aqueuse basique par exemple.

La figure 8D est une étape de recuit (hard bake en anglais) qui permet de compacter et/ou de durcir le noyau 31. Ce circuit s'effectue à une température d'environ 450°C sous flux d'azote. L'HSQ se densifie et se transforme peu à peu en oxyde de silicium SiO₂. Cette modification est une propriété intrinsèque du HSQ et ne dépend pas de la couche sous-jacente sur laquelle il est déposé.

On se retrouve ainsi après l'étape de lithographie et de recuit en présence d'un noyau d'oxyde de silicium amorphe. On peut l'encapsuler comme décrit précédemment aux figures 7D, 71, 7M.

L'élimination du noyau en oxyde de silicium peut se faire par dissolution dans un bain contenant de l'acide fluorhydrique. La concentration en acide fluorhydrique sera avantageusement de quelques pourcents pour un temps d'immersion de quelques minutes. Le bain peut être à température ambiante. On pourra également utiliser un bain tiède (température supérieure de quelques dizaines de degrés à la température ambiante) et/ou des ultra-sons dans le bain pour accélérer la vitesse de dissolution de l'oxyde de silicium.

Un avantage du HSQ est qu'il permet de ne pas conserver de résidus organiques après la dissolution de l'oxyde de silicium. Par conséquent les canaux et la zone réservoir sont compléments libérés.

La caractérisation infra-rouge permet, par ailleurs, de mettre en évidence très rapidement toute tentative de contrefaçon : le spectre infrarouge de l'oxyde de silicium obtenu par croissance est différent de celui obtenu à partir du HSQ.

Ce polymère HSQ permet d'obtenir de très bonnes résolutions, avec des tailles de motifs inférieures à 10 nanomètres, et une faible rugosité. Cette bonne résolution est un paramètre essentiel pour l'obtention des canaux de taille nanométrique. De plus, la possibilité de réaliser des motifs avec une très faible rugosité permet d'obtenir des moules ayant des comportements bien maîtrisés, en terme de perte de charge, pour l'écoulement de la matière à mouler par exemple.

La figure 9 est une vue en coupe d'un canal 13 isolé d'environ 9 nanomètres de large en microscopie électronique obtenu par le procédé selon l'invention avec du HSQ. Sur la figure, on peut apercevoir la surface du matériau (par exemple du silicium) au sein duquel se trouve le canal 13, ce qui montre bien que le canal 13 est enterré dans le matériau.

Un autre avantage du HSQ est que son utilisation permet une intégration technologique simple, puisque toutes les étapes sont compatibles avec des salles blanches silicium et font appel à des procédés bien connus.

Il est toutefois possible d'utiliser comme matériau sensible d'autres matériaux non organiques, comme le fluorure d'aluminium AlF₃ qui peut être considéré comme une résine minérale. L'article E. Kratschmer et al, J. V. Sci. Technol. B 4(1), page 361 (1986)) décrit par exemple que l'AlF₃ est bien compatible avec la réalisation de motifs nanométriques. Ce matériau, après lithographie avec exposition à un faisceau électronique, permet de réaliser des noyaux en aluminium. Le développement est auto-généré via la désorption du fluor comme l'explique E. Kratschner dans l'article. On peut rependre ensuite la succession des étapes d'encapsulation, de planarisation, puis d'élimination de l'aluminium pour la réalisation du moule selon l'invention. L'élimination de l'aluminium des noyaux peut se faire avec une solution d'acide phosphorique H₃PO₄ à 80°C.

On peut noter que ce procédé qui vient d'être décrit avec ces deux variantes n'utilise pas de gravure.

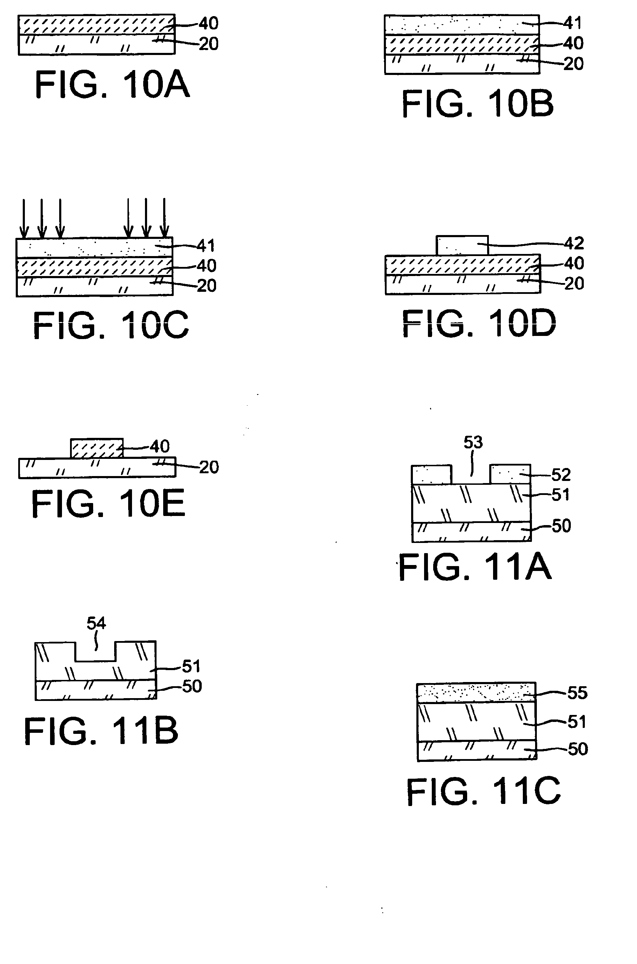

Il est possible de prévoir un autre mode de réalisation des noyaux illustré aux figures 10A à 10E.

On dépose sur le substrat 20 d'abord une couche 40 d'un matériau qui va réaliser le ou les noyaux (figure 10A). Ce matériau peut être par exemple de l'oxyde de silicium, de l'aluminium. On recouvre cette couche d'un matériau sensible 41 qui va être exposé (figure 10C) et développé (figure 10D) de manière à présenter un motif 42 au contour de chacun des noyaux à réaliser. Cette couche de matériau sensible 41 sert de masque lors d'une étape de gravure de la couche 40. Le motif 42 en matériau sensible est ensuite ôté par un développement en solution aqueuse ou par traitement plasma (figure 10E). La suite du procédé consiste à réaliser l'encapsulation, la planarisation et l'élimination des noyaux pour obtenir le même résultat.

On va maintenant expliquer un autre procédé de réalisation du moule selon l'invention par une technique de report de couche ou collage moléculaire. On se réfère aux figures 11A et 11B.

On va réaliser sur un premier substrat 50 recouvert d'une couche 51 de matériau du moule, la zone réservoir. Cette réalisation peut se faire par un procédé de lithographie classique suivi d'une gravure. La figure 11A représente, sur la couche 51 de matériau du moule, un matériau sensible 52 après lithographie et qui possède une ouverture 53 correspondant au contour de l'intérieur de la zone réservoir.

La figure 11B montre la couche de matériau du moule 51 comportant un motif 54 correspondant à l'intérieur de la zone réservoir. Ce motif 54 est obtenu par gravure en utilisant le matériau sensible 52 délimité comme masque. Le matériau sensible 52 a ensuite été ôté. La gravure peut être de type humide ou plasma si le matériau du moule est du silicium par exemple.

En variante illustrée aux figures 11C à 11G, on peut utiliser un procédé similaire au procédé décrit précédemment aux figures 7A à 7E pour réaliser un noyau correspondant à l'intérieur de la zone réservoir, réaliser autour les parois de la zone réservoir et éliminer le noyau.

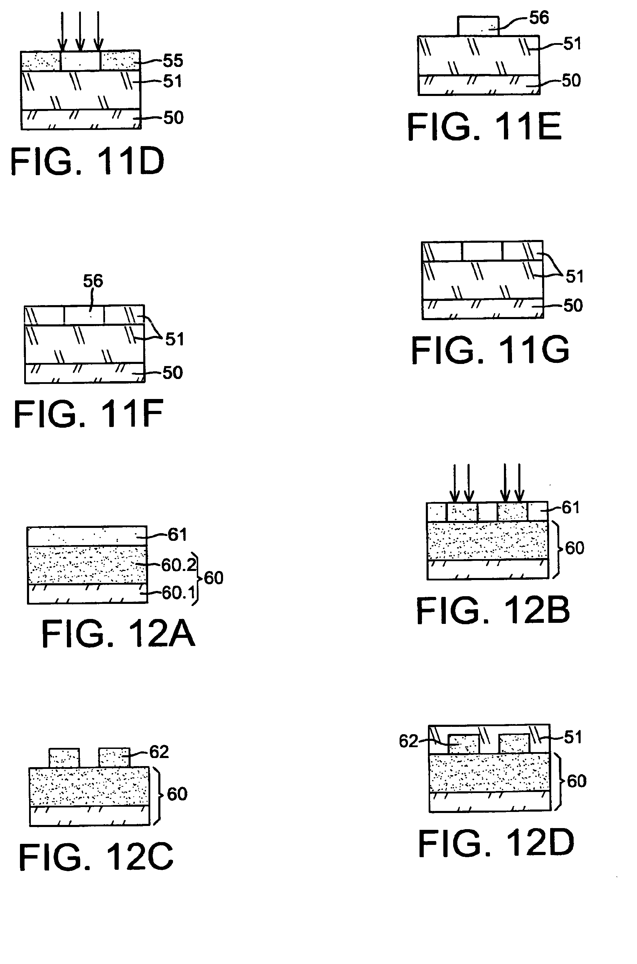

On part du premier substrat 50 sur lequel on dépose une couche 51 de matériau du moule puis une couche de matériau sensible 55 (figure 11C). En variante, la couche 51 pourrait être omise. On expose le matériau sensible 55 selon un motif qui correspond au contour de l'intérieur de la zone réservoir (figure 11D). On développe le matériau sensible 55 et on obtient un premier noyau 56 à la forme de l'intérieur de la zone réservoir (figure 11E). On dépose du matériau du moule 51 pour encapsuler le premier noyau 56 et on planarise le matériau du moule 51 avec arrêt sur le premier noyau 56 de manière à obtenir une première surface (figure 11F). Il suffit ensuite d'éliminer le premier noyau 56.

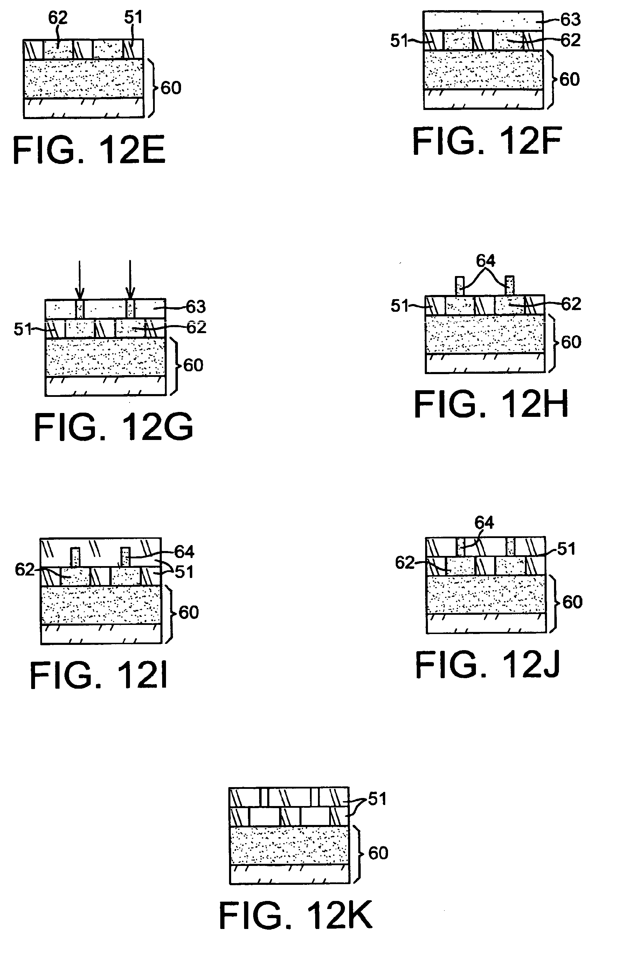

On va ensuite réaliser les motifs du moule et un ou plusieurs canaux en utilisant un procédé similaire à celui décrit précédemment aux figures 7F à 70. On se réfère aux figures 12A à 12K. On part d'un second substrat 60 de préférence bicouche 60.1, 60.1 avec la couche inférieure 60.1 en silicium par exemple et la couche supérieure 60.2 en oxyde de silicium par exemple. Ce second substrat 60 est un substrat sacrificiel qui sert de poignée et de support aux motifs du moule, il sera ôté en fin de procédé. La présence des deux couches facilite la séparation ultérieure.

On dépose sur le substrat bicouche 60, une couche d'un matériau sensible 61 (figure 12A). On expose ce matériau sensible 61 selon un motif correspondant au contour des motifs du moule (figure 12B). On développe le matériau sensible 61 de manière à obtenir un ou plusieurs troisièmes noyaux 62 à la forme des creux des motifs du moule (figure 12C). On notera que l'on a repris les dénominations utilisées lors de la description des figures 7. Le second noyau sera fait ultérieurement. On encapsule les troisièmes noyaux 62 ainsi obtenus avec le matériau du moule 51 que l'on planarise avec arrêt sur les troisième noyaux 62 de manière à obtenir une troisième surface (figure 12E).

On dépose sur la troisième surface, une seconde couche 63 d'un matériau sensible, le même que précédemment ou un autre pour réaliser un ou plusieurs canaux devant relier la zone réservoir aux motifs du moule (figure 12F). On expose cette seconde couche 63 selon un motif correspondant au contour de l'intérieur des canaux (figure 7G). On développe le matériau sensible 63 pour obtenir un ou plusieurs seconds noyaux 64, chacun à la forme de l'intérieur d'un canal (figure 12H). On encapsule les seconds noyaux 64 ainsi obtenus avec le matériau 51 du moule (figure 12I). Suit une étape de planarisation du matériau du moule 25 avec arrêt sur les seconds noyaux 64 de manière à obtenir une seconde surface (figure 12J). On élimine ensuite les troisièmes 62 et les seconds noyaux 64 pour libérer les canaux et les creux des motifs du moule (figure 12K).

On assemble ensuite la structure obtenue à la figure 12K à la structure obtenue à la figure 11G en prenant garde que les canaux débouchent dans la zone réservoir (c'est-à-dire la première surface à la seconde surface). Cet assemblage peut se faire par collage moléculaire ou par tout autre technique de report de couche.

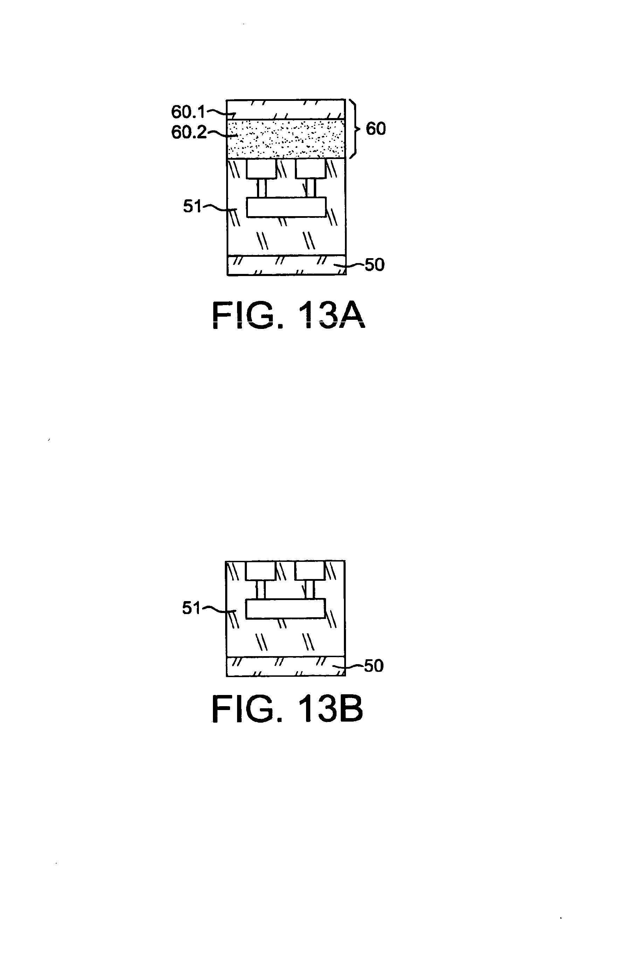

Il faut ensuite ôter le second substrat 60 pour pouvoir accéder aux motifs du moule (figure 13B). La couche 60.2 se retrouve en sandwich entre le moule et la couche 60.1 du substrat 60. La séparation peut se faire par exemple par gravure humide sélective du matériau de la couche 60.2, cette attaque étant inefficace sur le matériau du moule.

En variante, il est possible de faire une attaque mécanique tel un polissage des deux couches 60.1, 60.2 du substrat 60. L'attaque mécanique convient si le substrat 60 est massif.

Le fait fabriquer séparément la zone réservoir d'une part et les canaux et les motifs d'autre part permet de libérer plus facilement l'intérieur de ces éléments. De plus, on peut utiliser des procédés tout à fait standard en micro-électroniqe.

Ces différentes possibilités (variantes) doivent être comprises comme n'étant pas exclusives les unes des autres.

Bien que plusieurs modes de réalisation de la présente invention aient été représentés et décrits de façon détaillée, on comprendra que différents changements et modifications puissent être apportés sans sortir du cadre de l'invention.

Notamment, au lieu de réaliser le second et le troisième noyau comme on vient juste de le décrire, c'est à dire de manière similaire à ce qui a été décrit aux figures 7, il est possible d'utiliser comme matériau sensible l'HSQ ou une résine minérale telle le fluorure d'aluminium et de prévoir l'étape de recuit.

On peut également, dans cette variante où le moule se fait en deux parties que l'on assemble ensuite, réaliser les premier, second et troisième noyaux par gravure à travers un masque réalisé par lithographie comme décrit aux figures 10 au lieu d'utiliser la matière sensible comme noyau.

## Revendications

1. Moule pour la nano-impression comportant des motifs (12) de type creux et saillie et un ou plusieurs canaux (13), chacun d'entre eux faisant communiquer un motif (12) du moule avec une zone réservoir (14), **caractérisé en ce que** la superficie de la section d'un canal est inférieure à celle de la section du motif au niveau duquel le canal débouche.

2. Moule pour la nano-impression selon la revendication 1, dans lequel un canal (13) débouche au niveau d'un creux (12.1).

3. Moule pour la nano-impression selon l'une des revendications 1 ou 2, dans lequel la zone réservoir (14) comporte un réservoir unique.

4. Moule pour la nano-impression selon l'une des revendications 1 ou 2, dans lequel la zone réservoir (14) comporte une pluralité de réservoirs (14.1, 14.3).

5. Moule pour la nano-impression selon la revendication 4, dans lequel les réservoirs (14.1, 14.3) sont indépendants.

6. Moule pour la nano-impression selon la revendication 4, dans lequel les réservoirs (14.1) communiquent entre eux.

7. Moule pour la nano-impression selon l'une des revendications 1 à 6, dans lequel un canal (13) a une section transversale sensiblement constante.

8. Moule pour la nano-impression selon l'une des revendications 1 à 6, dans lequel un canal (13.a, 13.b) a une section transversale variable.

9. Moule pour la nano-impression selon la revendication 8, dans lequel un canal (13.a, 13.b) est sensiblement tronconique.

10. Moule pour la nano-impression selon l'une des revendications 1 à 9, dans lequel la zone réservoir (14) communique avec l'extérieur du moule.

11. Moule pour la nano-impression selon la revendication 10, dans lequel la communication se fait à l'aide d'au moins un conduit (17) qui débouche à la périphérie du moule.

12. Procédé de réalisation d'un moule pour la nano-impression ayant des motifs en creux et en saillie, **caractérisé en ce qu'**il comporte plusieurs étapes utilisant des techniques de lithographie, ces étapes incluant une étape de réalisation de motifs du moule, une étape de réalisation d'une zone réservoir, une étape de réalisation d'au moins un canal qui fait communiquer la zone réservoir avec un motif du moule, la superficie de la section d'un canal étant inférieure à celle de la section du motif au niveau duquel le canal débouche, ces trois étapes utilisant des noyaux, l'étape de réalisation de la zone réservoir se faisant :
- en réalisant, par lithographie, un premier noyau (24) correspondant à l'intérieur de la zone réservoir ;
- en encapsulant le premier noyau dans un matériau (25) qui est celui du moule ;
- en planarisant le matériau du moule avec arrêt sur le premier noyau de manière à obtenir une première surface;
- en éliminant le premier noyau (24) pour libérer l'intérieur de la zone réservoir ;
l'étape de réalisation d'au moins un canal se faisant :
- en réalisant, par lithographie, un noyau (26) correspondant à l'intérieur du canal ;
- en encapsulant le noyau correspondant à l'intérieur du canal dans un matériau (25) qui est celui du moule ;
- en planarisant le matériau du moule avec arrêt sur le noyau correspondant à l'intérieur du canal de manière à obtenir une surface;
- en éliminant le noyau correspondant à l'intérieur du canal pour libérer l'inférieur du canal ;
l'étape de réalisation des motifs se faisant :
- en réalisant, par lithographie au moins un noyau (27) correspondant à un creux des motifs ;
- en encapsulant le noyau correspondant à un creux des motifs dans un matériau (25) qui est celui du moule ;
- en planarisant le matériau du moule avec arrêt sur le noyau correspondant à un creux des motifs de manière à obtenir une surface;
- en éliminant le noyau correspondant à un creux des motifs pour libérer le creux.

13. Procédé selon la revendication 12, dans lequel le premier noyau est réalisé sur un substrat (20) servant de fond au moule.

14. Procédé selon l'une des revendications 12 ou 13, dans lequel le noyau (26) correspondant à l'intérieur du canal est réalisé sur la première surface.

15. Procédé selon l'une des revendications 12 à 14, dans lequel le noyau (27) correspondant à un creux des motifs est réalisé sur la surface obtenue après planarisation et arrêt sur le noyau correspondant à l'intérieur du canal.

16. Procédé selon l'une des revendications 12 à 15, dans lequel l'étape d'élimination est commune pour le premier noyau, le noyau correspondant à l'intérieur du canal et le noyau correspondant à un creux des motifs.

17. Procédé selon l'une des revendications 12 à 16, dans lequel le noyau (62) correspondant à un creux des motifs est réalisé sur un substrat (60).

18. Procédé selon la revendication 17, dans lequel le substrat (60) est bicouche (60.1, 60.2).

19. Procédé selon l'une des revendications 12 à 18, dans lequel le noyau (64) correspondant à l'intérieur du canal est réalisé sur la surface obtenue après planarisation et arrêt sur le noyau (62) correspondant à un creux des motifs.

20. Procédé selon la revendication 19, dans lequel l'étape d'élimination est commune pour le noyau (64) correspondant à l'intérieur du canal et le noyau (62) correspondant à un creux des motifs.

21. Procédé selon l'une des revendications 12 à 20, dans lequel la surface obtenue après planarisation et arrêt sur le noyau (64) correspondant à l'intérieur du canal est assemblée à la première surface après l'étape d'élimination.

22. Procédé selon la revendication 21, dans lequel le substrat (60) sur lequel est réalisé le noyau (62) correspondant à un creux des motifs est ôté après l'assemblage.

23. Procédé selon l'une des revendications 12 à 22, dans lequel les noyaux sont réalisés par un matériau qui a été gravé à travers un masque obtenu par lithographie.

24. Procédé selon l'une des revendications 12 à 23, dans lequel les noyaux sont réalisés à base d'un matériau sensible exposé et développé, ce matériau sensible étant une résine photosensible ou sensible aux électrons.

25. Procédé selon la revendication 24, dans lequel une étape de recuit sévère a lieu entre le développement et l'encapsulation, visant à compacter et/ou densifier le matériau sensible.

26. procédé selon l'une des revendications 24 ou 25, dans lequel le matériau sensible est un matériau de la famille des hydrogensilses quicaxanes.

27. Procédé selon l'une des revendications 24 ou 25, dans lequel le matériau sensible est une résine minérale telle que le fluorure d'aluminium.

28. Utilisation d'un moule selon l'une des revendications 1 à 11, pour le moulage d'un matériau déformable.

## Claims

1. Mould for nano-printing, comprising recess and projection type patterns (12) and one or more ducts (13), each providing a communication between a mould pattern (12) and a reservoir area (14), **characterized in that** the duct cross-section is smaller than the surface area of the pattern at which it opens up.

2. Mould for nano-printirtg according to claim 1, wherein a duct (13) opens up in a recess (12.1).

3. Mould for nano-printing according to one of claims 1 or 2, wherein the reservoir area (14) comprises a single reservoir.

4. Mould for nano-printing according to one of claims 1 or 2, wherein the reservoir area (14) comprises a plurality of reservoirs (14.1, 14.3).

5. Mould for nano-printing according to claim 4, wherein the reservoirs (14.1, 14.3) are independent.

6. Mould for nano-printing according to claim 4, wherein the reservoirs (14.1) communicate with each other.

7. Mould for nano-printing according to one of claims 1 to 6, wherein a duct (13) has an approximately constant cross-section.

8. Mould for nano-printing according to one of claims 1 to 6, wherein a duct (13.a, 13.b) has a variable cross-section.

9. Mould for nano-printing according to claim 8, wherein a duct (13.a, 13.b) is approximately truncated cone-shaped.

10. Mould for nano-printing according to one of claims 1 to 9, wherein the reservoir area (14) communicates with the outside of the mould.

11. Mould for nano-printing according to claim 10, wherein the communication is made using at least one duct (17) that opens up at the periphery of the mould.

12. Process for manufacturing a mould for nano-printing, having recess and projection patterns, **characterized in that** it comprises several steps using lithography techniques, these steps including a step to make mould patterns, a step to make a reservoir area, a step to make at least one duct providing a communication between the reservoir area and a pattern in the mould, the surface area of the cross-section of a duct being smaller than that of the cross-section of the pattern at which it opens up, said three steps using cores, the step to make the reservoir area involving:
- using lithography to make a first core (24) corresponding to the inside of the reservoir area;
- encapsulating the first core in a material (25) that is the same as the mould material;
- levelling the material from which the mould is made, stopping on the first core so as to obtain a first surface;
- eliminating the first core (24) to expose the inside of the reservoir area;
the step to make at least one duct involving:
- using lithography to make a core (26) corresponding to the inside of the duct;
- encapsulating the core corresponding to the inside of the duct in a material (25) that is the same as the mould material;
- levelling the mould material stopping on the core corresponding to the inside of the duct so as to obtain a surface;
- eliminating the core corresponding to the inside of the duct to expose the inside of the duct;
the pattern production step involving:
- using lithography to make at least one core (27) corresponding to a recess in the patterns;
- encapsulating the core corresponding to a recess in the patterns in a material (25) that is the same as the mould material;
- levelling the mould material stopping on the core corresponding to a recess in the patterns so as to obtain a surface;
- eliminating the core corresponding to a recess in the patterns to expose the recess.

13. Process according to claim 12, wherein the first core is made on a substrate (20) acting as the bottom of the mould.

14. Process according to claims 12 or 13, wherein the core (26) corresponding to the inside of the duct is made on the first surface.

15. Process according to any one of the claims 12 to 14, wherein the core (27) corresponding to a recess in the patterns is made on the surface after levelling and stopping on the core corresponding to the inside of the duct.

16. Process according to one of claims 12 to 15, wherein the elimination step is common for the first core, the core corresponding to the inside of the duct, and the core corresponding to a recess in the patterns.

17. Process according to any one of the claims 12 to 16, wherein the core (62) corresponding to a recess in the patterns is made on a substrate (60).

18. Process according to claim 17, wherein the substrate (60) is a dual layer (60.1, 60.2).

19. Process according to any one of the claims 12 to 18, wherein the core (64) corresponding to the inside of the duct is made on the surface obtained after levelling and stopping on the core (62) corresponding to a recess in the patterns.

20. Process according to claim 19, wherein the elimination step is common for the core (64) corresponding to the inside of the duct (62), and the core (62) corresponding to a recess in the patterns.

21. Process according to any one of the claims 12 to 20, wherein the surface obtained after levelling and stopping on the core (64) corresponding to the inside of the duct, is assembled to the first surface after the elimination step.

22. Process according to claim 21, wherein the substrate (60) on which the core (62) corresponding to a recess in the patterns is made, is removed after assembly.

23. Process according to one of claims 12 to 22, wherein cores are made of a material that has been etched through a mask obtained by lithography.

24. Process according to any ane of the claims 12 to 23, wherein the cores are made on the basis of a sensitive, exposed and developed material, said material being a photosensitive resin or an electron-sensitive resin.

25. Process according to claim 24, wherein it includes a hard bake step between development and encapsulation in order to transform the sensitive material.

26. Process according to either of the claims 24 or 25, wherein the sensitive material is a material in the hydrogen silsesquioxanes family.

27. Process according to either of the claims 24 or 25, wherein the sensitive material is a mineral resin such as aluminium fluoride.

28. Use of a mould according to one of claims 1 to 11 for moulding a deformable material.

## Patentansprüche

1. Form für das Nanoprintverfahren, Muster (12) des Typs Vertiefung und Erhöhung sowie einen oder mehrere Kanäle (13) umfassend, von denen jeder ein Muster (12) der Form mit einer Speicherzone (14) verbindet,
**dadurch gekennzeichnet, dass** die Fläche des Querschnitts eines Kanals kleiner ist als die des Querschnitts des Musters, in das der Kanal mündet.

2. Form für das Nanoprintverfahren nach Anspruch 1, bei der ein Kanal (13) in einer Vertiefung (12.1) mündet.

3. Form für das Nanoprintverfahren nach einem der Ansprüche 1 oder 2, bei der die Speicherzone (14) einen einzigen Speicher umfasst.

4. Form für das Nanoprintverfahren nach einem der Ansprüche 1 oder 2, bei der die Speicherzone (14) eine Vielzahl Speicher (14.1, 14.3) umfasst.

5. Form für das Nanoprintverfahren nach Anspruch 4, bei der die Speicher (14.1, 14.3) unabhängig sind.

6. Form für das Nanoprintverfahren nach Anspruch 4, bei der die Speicher (14.1, 14.3) miteinander kommunizieren.

7. Form für das Nanoprintverfahren nach einem der Ansprüche 1 bis 6, bei der ein Kanal (13) einen im Wesentlichen konstanten Querschnitt hat.

8. Form für das Nanoprintverfahren nach einem der Ansprüche 1 bis 6, bei der ein Kanal (13.a, 13.b) einen im Wesentlichen variablen Querschnitt hat.

9. Form für das Nanoprintverfahren nach Anspruch 8, bei der ein Kanal (13.a, 13.b) im Wesentlichen kegelstumpfförmig ist.

10. Form für das Nanoprintverfahren nach einem der Ansprüche 1 bis 9, bei der die Speicherzone (14) mit der Außenseite der Form kommuniziert.

11. Form für das Nanoprintverfahren nach Anspruch 10, bei der die Kommunikation mit Hilfe wenigstens einer Leitung (17) stattfindet, die an der Peripherie der Form mündet.

12. Verfahren zur Realisierung einer Form für das Nanoprintverfahren, die Muster des Typs Vertiefung und Erhöhung umfasst, **dadurch gekennzeichnet, dass** es mehrere Schritte mit Anwendung von Lithographietechniken umfasst, wobei diese Schritte einen Schritt zur Realisierung von Mustern der Form, einen Schritt zur Realisierung einer Speicherzone und einen Schritt zur Realisierung wenigstens eines Kanals umfasst, der die Speicherzone mit einem Muster der Form verbindet, wobei die Fläche des Querschnitts eines Kanals kleiner ist als die des Querschnitts des Musters, in dem der Kanal mündet, und diese drei Schritte Kerne benutzen, wobei:
der Schritt zur Realisierung der Speicherzone umfasst:
- Realisierung eines dem Innern der Speicherzone entsprechenden ersten Kerns (24) durch Lithographie;
- Einkapselung des ersten Kerns in ein Material (25), das dasjenige der Form ist;
- Planarisierung des Materials der Form mit Stopp auf dem ersten Kern, um eine erste Oberfläche zu erhalten;
- Eliminierung des ersten Kerns (24), um das Innere der Speicherzone freizumachen;
der Schritt zur Realisierung wenigstens eines Kanals umfasst:
- Realisierung eines dem Innern des Kanals entsprechenden Kerns (26) durch Lithographie;
- Einkapselung des dem Innern des Kanals entsprechenden Kerns in ein Material (25), das dasjenige der Form ist;
- Planarisierung des Materials der Form mit Stopp auf dem dem Innern des Kanals entsprechenden Kern, um eine Oberfläche zu erhalten;
- Eliminierung des dem Innern des Kanals entsprechenden Kerns, um das Innere des Kanals freizumachen;
der Schritt zur Realisierung der Muster umfasst:
- Realisierung wenigstens eines einer Vertiefung der Muster entsprechenden Kerns (27) durch Lithographie;
- Einkapselung des einer Vertiefung der Muster entsprechenden Kerns in ein Material (25), das dasjenige der Form ist;
- Planarisierung des Materials der Form mit Stopp auf dem einer Vertiefung der Muster entsprechenden Kern, um eine Oberfläche zu erhalten;
- Eliminierung des einer Vertiefung der Muster entsprechenden Kerns, um die Vertiefung freizumachen.

13. Verfahren nach Anspruch 12, in dem der erste Kern auf einem der Form als Boden dienenden Substrat (20) realisiert wird.

14. Verfahren nach einem der Ansprüche 12 oder 13, in dem der dem Innern des Kanals entsprechende Kern (26) auf der ersten Oberfläche realisiert wird.

15. Verfahren nach einem der Ansprüche 12 bis 14, in dem der einer Vertiefung der Muster entsprechende Kern (27) auf der Oberfläche realisiert wird, die man nach Planarisierung und Stopp auf dem dem Innern des Kanals entsprechenden Kern erhält.

16. Verfahren nach einem der Ansprüche 12 bis 15, in dem der Eliminierungsschritt für den ersten Kern, den dem Innern des Kanals entsprechenden Kern und dem einer Vertiefung der Muster entsprechenden Kern ein gemeinsamer Schritt ist.

17. Verfahren nach einem der Ansprüche 12 bis 16, in dem der einer Vertiefung der Muster entsprechende Kern (62) auf einem Substrat (60) realisiert wird.

18. Verfahren nach Anspruch 17, in dem das Substrat (60) zweischichtig (60.1, 60.2) ist.

19. Verfahren nach einem der Ansprüche 12 bis 18, in dem der dem Innern des Kanals entsprechende Kern (64) auf der Oberfläche realisiert wird, die man nach Planarisierung und Stopp auf dem einer Vertiefung der Muster entsprechenden Kern (62) erhält.

20. Verfahren nach Anspruch 19, in dem der Eliminierungsschritt für den dem Innern des Kanals entsprechenden Kern (64) und dem einer Vertiefung der Muster entsprechenden Kern (62) ein gemeinsamer Schritt ist.

21. Verfahren nach einem der Ansprüche 12 bis 20, in dem die nach Planarisierung und Stopp auf dem dem Innern des Kanals entsprechenden Kern (64) erhaltene Oberfläche nach dem Eliminierungsschritt mit der ersten Oberfläche zusammengefügt wird.

22. Verfahren nach Anspruch 21, in dem das Substrat (60), auf dem der einer Vertiefung der Muster entsprechende Kern (62) realisiert ist, nach der Zusammenfügung entfernt wird.

23. Verfahren nach einem der Ansprüche 12 bis 22, in dem die Kerne durch ein Material realisiert werden, das durch eine mittels Lithographie hergestellte Maske hindurch geätzt worden ist.

24. Verfahren nach einem der Ansprüche 12 bis 23, in dem die Kerne auf der Basis eines empfindlichen belichteten und entwickelten Materials realisiert werden, wobei dieses Material ein photosensibles oder elektronensensibles Resist ist.

25. Verfahren nach Anspruch 24, in dem zwischen dem Entwickeln und Einkapseln ein Scharftemperschritt stattfindet, um das empfindliche Material zu kompaktieren und/oder zu verdichten.

26. Verfahren nach einem der Ansprüche 24 oder 25, in dem das empfindliche Material ein Material aus der Gruppe der Hydrogensilsesquioxane ist.

27. Verfahren nach einem der Ansprüche 24 oder 25, in dem das empfindliche Material ein Mineralharz wie etwa das Aluminiumfluorid ist.

28. Nutzanwendung einer Form nach einem der Ansprüche 1 bis 11 zur Abformung einen verformbaren Materials.
